# EUROPEAN PATENT APPLICATION

(11) **EP 1 166 960 A2**
(43) Date of publication of application: **02.01.2002**
(21) Application number: 01113070.5
(22) Date of filing: 29.05.2001
(51) Int. Cl.: B23Q 17/09, B23Q 11/04

(54) **Processing machine with abnormal-load detecting function**

(30) Priority: 19.06.2000 JP 2000183057
(71) Applicant: Murata Kikai Kabushiki Kaisha, Minami-ku, Kyoto-shi, Kyoto 601 (JP)
(72) Inventor: Kawai, Hidetsugu, Gifu-shi, Gifu (JP)
(74) Representative: Liedl, Christine, Dipl.-Chem.

(57) **Abstract**

The present invention provides a processing machine having the function of sensitively detect collisions or other abnormalities to prevent the machine from being operated under abnormal conditions. Means 22 is provided for detecting a load on a drive source 1 for driving a movable member 2. Abnormality determining means 23 is provided for determining the load is abnormal if the load as detected by the abnormality means 22 exceeds an abnormality determination level (Lb). The abnormality determining means 23 sets the abnormality determination level (Lb) on the basis of the load as measured during the preceding driving operation of the movable member 2 or the average of loads as measured during several past driving operations that are temporally close to the current one (Fig. 1A).

## Description

### Field of the Invention

The present invention relates to a processing machine which is applied to machine tools such as lathes, loaders therefor, distribution machines, and various industrial machines and which can determine the presence of such abnormality that a movable body driven by a drive source collides against an obstacle as well as other abnormalities.

### Background of the Invention

Many machine tools such as lathes have a loading and unloading device such as a gantry loader to enable unmanned automatic operations. As, however, the automation advances and more complicated conveying devices are attached to the machine tools, the conveying device and a slide of the machine table may interfere with each other at more locations, resulting in collisions.

Thus, as safety measures to take if such collisions occur, machine tools that are emergency-stopped under an overload have been proposed. That is, if a movable member collides against ant obstacle during movement, an abnormal torque occurs in a motor to heavily damage the machine. Thus, disturbance torque such as abrasion torque is monitored so that the machine can be stopped when the disturbance torque becomes equal to or higher than a predetermined determination level. To more effectively lessen damage on such a collision, another proposed machine controls the torque when the load exceeds a preparation level that is set lower than the abnormality determination level (The Unexamined Japanese Patent Application Publication (Tokkai-Hei) 8-99248).

In each of the conventional examples, the abnormality determination level is semi-fixed using parameter settings. Since the disturbance of the machine depends on a start-up operation or the outside air temperature, the conventional machines comprise elements that are at the highest level in terms of these factors, or are set to have a high safe factor. For example, during the first cycle after the machine has been stopped or a power supply has been turned on, lubricating oil is still cool and does not spread throughout the machine, resulting in a higher motor torque than during normal operations. An abnormality determination level is set at a value equal to such a high torque during initial cycles plus a margin. That is, the abnormality determination level is set at a high value enough to prevent detection errors. Thus, collisions or other abnormalities may not be sensitively detected, so that the machine may be operated under abnormal conditions. For example, a tool operated under abnormal conditions may be continuously used for cutting. Additionally, the conventional abnormality determination level may not serve to sufficiently prevent damage on collisions.

It is an object of the present invention to provide a processing machine with the abnormal-load detecting function of sensitively detecting collisions or other abnormalities to prevent the machine from being operated under abnormal conditions.

It is another object of the present invention to properly deal with abnormalities during initial cycles.

It is yet another object of the present invention to enable collisions or other abnormalities to be sensitively detected to prevent the machine from being operated under abnormal conditions and to enable the presence of unexpected abnormalities to be determined.

### Summary of the Invention

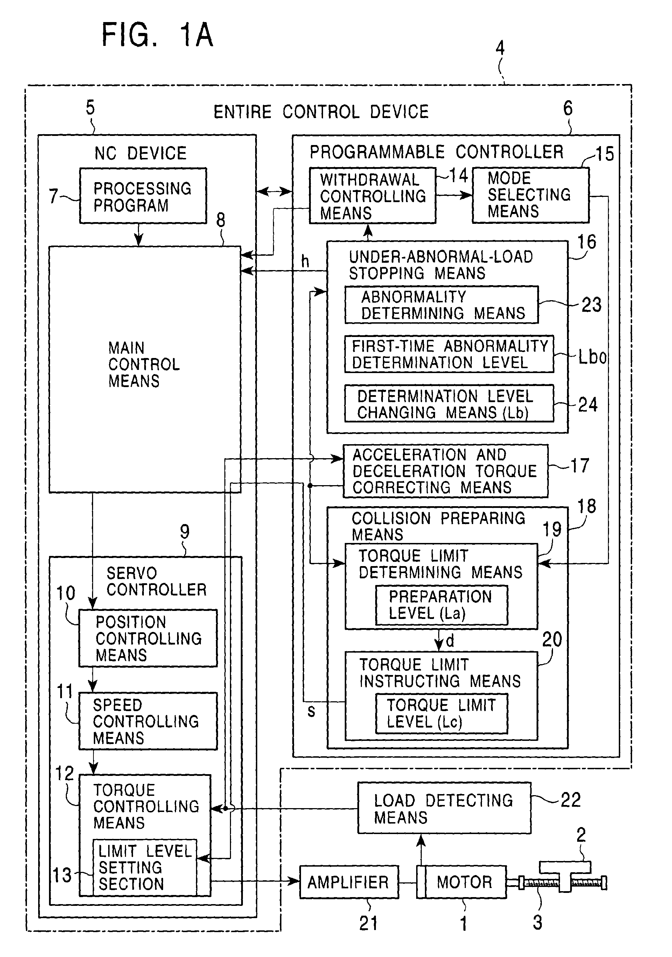

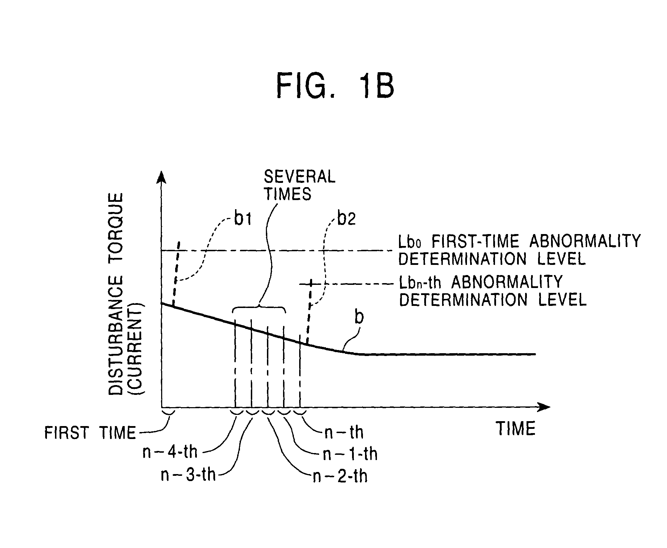

A configuration of the present invention will be described with reference to Figure 1 corresponding to an embodiment thereof.

The present invention provides a processing machine with an abnormal-load detecting function, comprising a drive source 1 for driving a movable member 2 constituting part of the processing machine, load detecting means 22 for detecting a load on the drive source 1, and abnormality determining means 23 for determining that the load is abnormal if the load detected by the load detecting means exceeds a predetermined abnormality determination level (La) set on the basis of a load as measured during a preceding driving operation of the movable member or an average of loads as measured during several past driving operations.

The operation of this configuration will be described. If the movable member 2 collides against any obstacle or the moving resistance of the movable member 2 increases due to any abnormality, the drive source 1 attempts to move the movable member 2 to an instructed location, thereby increasing the load on itself. The abnormality determining means 23 monitors this load and determines that the load is abnormal if it exceeds the abnormality determination level (Lb). The abnormality determination level (Lb) has a value determined on the basis of the load as measured during the preceding driving operation of the movable member 2 or the average of loads as measured during several past driving operations that are temporally close to the current one. For example, for a normal operation during which lubricating oil is sufficiently warm, whether or not the load is abnormal is determined on the basis of the load as measured during that normal operation. For an initial cycle during which the lubricating oil is cool and thus does not appropriately lubricate the machine, a higher abnormality determination level is set depending on the load. That is, whether or not the load is abnormal can be determined by setting a relative value for the preceding load or the like, that is, the difference therefrom, above which the current load is determined to be abnormal.

In this manner, the abnormality determination level (Lb) does not have a fixed value but a relative value determined on the basis of a load as measured during a movement temporally close to the current one, thereby eliminating the need to set a level corresponding to a high safety factor. Thus, a processing machine having a high and appropriate abnormal-load detection sensitivity can be configured.

The expression "preceding driving operation of the movable member 2" as used herein refers to the driving operation of the movable member during the preceding processing cycle whether the movable member 2 is driven once or more during the single processing cycle of the processing machine; it may be the preceding driving operation of the movable member 2 included in its individual movements within the processing cycle. The expression "several past" of the description "average of loads as measured during several past driving operations that are temporally close to the current one" may refer to several past processing cycles or several past driving operations of the movable member 2 included in its individual movements within one processing cycle. The expression "temporally close to the current driving operation" need not necessarily include the preceding driving operation. The term "average" is not limited to an arithmetic average but includes a moving average and various other statistical averages.

In the present invention, the abnormality determining means 23 preferably compares, during initial cycles of the processing machine, a detected load with a fixed abnormality determination level (Lbo) to determine whether or not the load is abnormal. The initial cycles include, for example, the first cycle after the machine has been stopped or a power supply has been turned on.

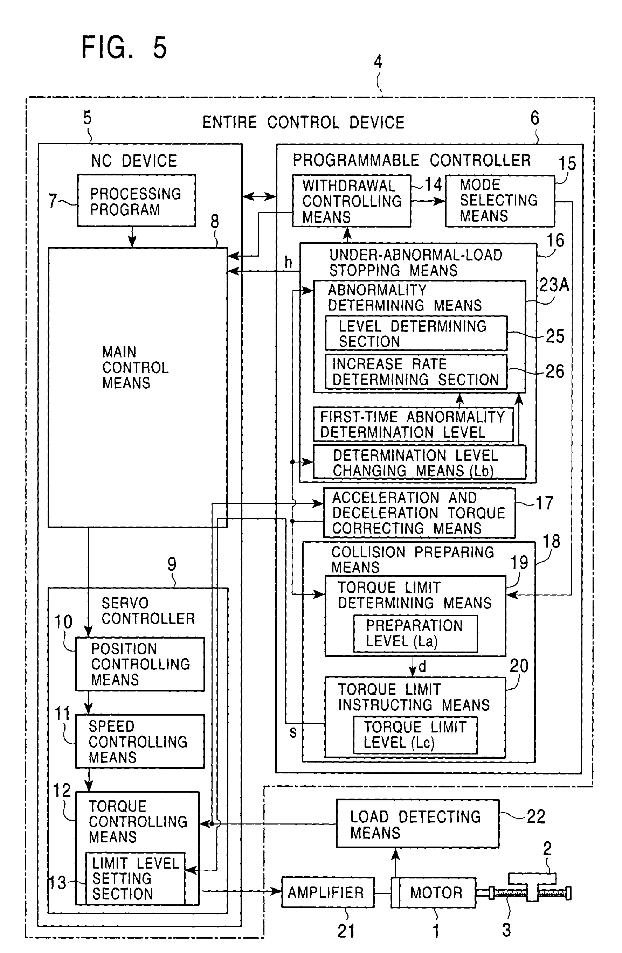

Another embodiment of the present invention will be described with reference to Figure 5, corresponding to this embodiment.

This embodiment provides a processing machine with an abnormal-load detecting function, comprising a drive source 1 for driving a movable member 2 constituting part of the processing machine, load detecting means 22 for detecting a load on the drive source 1, and abnormality determining means 23A having a level determining section 25 and an increase rate determining means 26. The level determining section 25 determines that the load is abnormal if the load detected by the load detecting means 22 exceeds a predetermined abnormality determination level (La) set on the basis of a load as measured during a preceding driving operation of the movable member or an average of loads as measured during several past driving operations. The increase rate determining means 26 determines that the load is abnormal if the rate of an increase in the load detected by the load detecting means 22 exceeds a predetermined value. The determining means 23A determines that the load is abnormal if at least one of the level determining section 25 and the increase rate determining section 26 determines the abnormality of the load.

With this configuration, the determination made by the level determining section 25 of the abnormality determining means 23A leads to a high and appropriate abnormal-load detection sensitivity. Since the increase rate determining means 26 determines that the load is abnormal if the rate of an increase in the load detected by the load detecting means 22 exceeds the predetermined value, the presence of unexpected abnormalities can be determined. Since the determining means 23A determines that the load is abnormal if at least one of the level determining section 25 and the increase rate determining section 26 determines the abnormality of the load, an abnormal magnitude of the load or an abnormal rate of an increase in the load can be detected, thereby enabling more appropriate abnormality detection.

### Brief Description of the Drawings

Figure 1A is a block diagram showing a conceptual configuration of one embodiment of the present invention, and Figure 1B is an explanatory drawing showing the relationship between temporal variations in a load and the load as measured on a collision and an abnormality determination level.
Figure 2 is a graph showing the relationship between the load as measured on a collision and each level.
Figure 3 is an explanatory drawing showing the relationship between disturbance torque and acceleration and deceleration torque.
Figure 4 is an explanatory drawing showing a comparison of the disturbance torque during the first operation with that during the n-th operation.
Figure 5 is a block diagram showing a conceptual configuration of another embodiment of the present invention.
Figure 6 is a schematic block diagram of a control device for a machine tool with a loader to which a processing machine with an abnormal-load detecting function according to each embodiment has been applied.
Figure 7 is a front view of the processing machine with the loader.
Figure 8 is a front view of the machine tool.

### Detailed Description of the Preferred Embodiments

One embodiment of the present invention will be described with reference to Figures 1 to 4.

A movable member 2 is composed of a slide of a processing machine such as a machine tool, a movable portion of a loader, or the like and is driven to advance and recede by means of a drive source 1 via a feed screw such as a ball screw 3. The drive source 1 is composed of a motor such as a servo motor and driven via an amplifier 21 in accordance with outputs from a servo controller 9 of an NC device.

A general control device 4 is means for controlling the entire processing machine comprising the movable member 2, and comprises the NC device 5 and a programmable controller 6. The NC device 5 is composed of main control means 8 and servo controllers for corresponding shafts. The illustrated servo controller 9 is means composed of the servo motor for controlling the drive source 1. The main control means 8 reads a processing program 7 to output shaft feeding instructions for the corresponding shafts to the servo controllers including the servo controller 9, while outputting sequence control instructions to the programmable controller 6. The programmable controller 6 is a device that principally controls the sequence for the entire machine.

The servo controller 9 is what is called a software servo and is composed of control programs and a computer device acting as means for executing these programs. The servo controller 9 comprises position controlling means 10, speed controlling means 11 and torque controlling means 12 for controlling the position, speed and torque, respectively, using a closed loop. The closed loop is a triple loop including torque, speed, and position loops arranged in this order from the inside. Specifically, the torque controlling means 12 has a limit level setting section 13 to limit output torque to a level set in the limit level setting section 13 or lower while monitoring the value detected by the load detecting means 22 of the drive source 1. The load detector 22 is composed of an ammeter or the like which detects the current value of a power supply circuit connected to the drive source 1 via the amplifier 21. An analog detected load value is converted into a digital value by means of an A/D converter (not shown in the drawings) before being loaded into the servo controller 9. Outputs from the torque controlling means 12 are provided to the amplifier 21 for driving the drive source 1. The programmable controller 6 has under-abnormal-load stopping means 16, collision preparing means 18, abnormal-load determining means 23, determination level changing means 24, acceleration and deceleration torque correcting means 17, withdrawal instructing means 14, and mode selecting means 15, all of which constitute an collision torque controlling device.

When the abnormality determining means 23 determines that the load is abnormal, the under-abnormal-load stopping means 16 outputs a stop instruction h to the main control means 8, while operating the withdrawal instructing means 14. Although the under-abnormal-load stopping means 16 includes the abnormal-load determining means 23 and the determination level changing means 24, the abnormal-load determining means 23 and the determination level changing means 24 may be independent of the under-abnormal-load stopping means 16.

The abnormality determining means 23 monitors, via the acceleration and deceleration torque correcting means 17, the load value detected by the load detecting means 22 and determines that the load is abnormal when the detected load value reaches the abnormality determination level (Lb) set by the determination level changing means 24. During initial cycles of the processing machine, the abnormality determining means 23 compares the detected load with a fixed abnormality determination level (Lbo) to determine whether or not the load is abnormal.

The determination level changing means 24 sets the abnormality determination level (Lb) on the basis of the load as measured during the preceding driving operation of the movable member 2 or the average of loads as measured during several past driving operations that are temporally close to the current one. For example, the determination level changing means 24 sets as a reference the load as measured during the preceding driving operation or the average of loads as measured during several past driving operations and sets this reference plus a set load amount corresponding to a margin, to be the abnormality determination level (Lb).

The expression "preceding driving operation of the movable member 2" as used herein refers to the driving operation of the movable member 2 during the preceding processing cycle whether the movable member 2 is driven once or more during the single processing cycle of the processing machine, and it may be the preceding driving operation of the movable member 2 included in its individual movements within the processing cycle. The expression "several past" of the description "average of loads as measured during several past driving operations that are temporally close to the current one" may refer to several past processing cycles or several past driving operations of the movable member 2 included in its individual movements within one processing cycle. The expression "temporally close to the current driving operation" need not necessarily include the preceding driving operation. The term "average" is not limited to an arithmetic average but includes a moving average and various other statistical averages.

The collision preparing means 18 has torque limit determining means 19 and torque limit instructing means 20. The torque limit determining means 19 monitors, via the acceleration and deceleration torque correcting means 17, the load value detected by the load detecting means 22 and when the detected load value reaches a set preparation level (La), it outputs a determination signal (d) to the torque limit instructing means 20 indicating that the load has reached the level. The preparation level (La) is set at a value smaller than that of the abnormality determination level (Lb).

The preparation level (La) may have a fixed value or may be set by the determination level changing means 24 on the basis of the load as measured during the preceding driving operation of the movable member 2 or the average of loads as measured during several past driving operations that are temporally close to the current one.

The torque limit instructing means 20 is responsive to the determination signal (d) to set the value of a set torque limit level (Lc) in the limit level setting section 13 of the torque controlling means 12 of the servo controller 9, while enabling the torque limiting function of the torque controlling means 12.

The torque limit level (Lc) is set equal to, for example, 50% of the maximum torque. The abnormality determination level (Lb) in the under-abnormal-load stopping means 16, the preparation level (La) in the torque limit determining means 19, and the torque limit level (Lc) in the torque limit instructing means 20 can be set at and changed to arbitrary values by means of operations on a control panel (not shown in the drawings) or external inputs. The collision preparing means 18 also has the function of clearing the torque limit imposed by the torque controlling means 12 if the detected load value does not increase up to the abnormality determination level (Lb) within a set time after reaching the preparation level (La).

The acceleration and deceleration correcting means 17 is a means that sets torques required for acceleration and deceleration in advance using a change curve indicating variations in accordance with the elapsed time after the start of acceleration or deceleration, and outputs a value obtained by subtracting the set acceleration or deceleration torque from the detected load value from the load monitoring means 22. The input to the acceleration and deceleration torque correcting means 17 from the load detecting means 22 is transmitted via the servo controller 9 and the main control means 8, so that the detected load value is input as a digital value. The withdrawal instructing means 14 gives the main control means 8 an instruction to rotate the drive source 1 for a predetermined period of time or a predetermined number of times, immediately after the stop instruction (h) from the under-abnormal-load stopping means 16 or the stopping process executed by the servo controller 9. The mode selecting means 15 switches between modes for enabling and disabling the collision preparing means 18, and when the withdrawal instructing means 14 becomes operative, the mode selecting means 15 automatically switches to the function disabling means. The control panel or external input can also be used to allow the mode selecting means 15 to switch the mode.

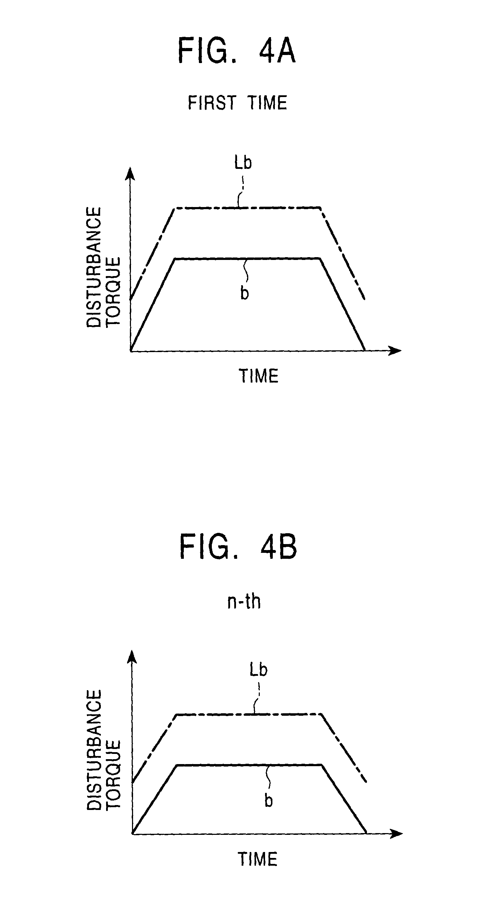

The operation of the above configuration will be described. If the drive source 1 is allowed to move the movable member 2 at a constant speed over a predetermined distance, an actual torque such as that shown in Figure 3 by a curve (a) acts on the drive source 1 as a load. The actual torque is composed of disturbance torque (b), shown like a trapezoid in the figure, and acceleration and deceleration torques, shown by portions (a1, a3) of the curve (a). The disturbance torque (b) is composed of abrasion torque or the like applied to each portion due to the movement of the movable member 22, and has a value increasing consistently with the speed.

The acceleration and deceleration torque correcting means 17 subtracts the acceleration or deceleration torque from the actual torque so that the under-abnormal-load stopping means 16 and the collision preparing means 18 can monitor the disturbance torque (b). For this disturbance torque (b), the determination level changing means 24 sets the abnormality determination level (Lb) and the preparation level (La). The preparation level (La) may have a fixed value. The preparation level (La) has a smaller value than the abnormality determination level (Lb).

The abnormality determination level (Lb) may be set using the trapezoidal change curve indicative of variations in the disturbance torque (b) as shown Figure 3. In this case, the abnormality determination level (Lb) is lower than the preparation level (La) during acceleration or deceleration. A specific setting for the abnormality determination level (Lb) will be described later.

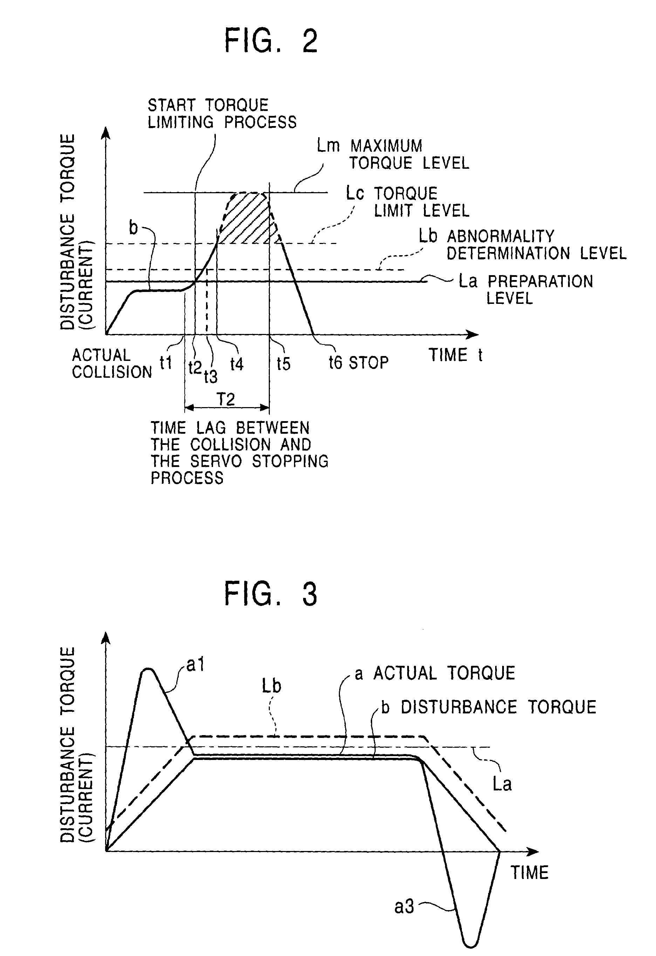

While the movable member 2 is operating normally, the disturbance torque (b) as the detected load value, never reaches the preparation level (La) and the operation continues with the torque limiting means 12 remaining disabled. When the movable member 2 collides against an obstacle, the drive source 1 attempts to move the movable member 2 to an instructed location indicated by the servo controller 9, so that the load thereon increases, as shown in Figure 2. While the load is increasing, when the disturbance torque (b) reaches the preparation level (La), the collision preparing means 18 outputs a determination signal (d) indicating that the level has been exceeded, and the torque controlling means 12 of the servo controller 9 is enabled. Further, when the disturbance torque (b) reaches the abnormality determination level (Lb), the under-abnormal-load stopping means 16 gives an instruction to stop the drive source 1. At this time, there is a time lag (T2) between the collision (point of time (t1)) and the start of the servo stopping process (t5), when the movable member 2 remains pressed against the collision target due to the output from the drive source 1.

However, before a point of time (t3) when the abnormality determination level (Lb) is reached, the torque limiting process is started at a point of time (t2) when the preparation level (La) is reached. Thus, although the motor output increases, it does not increase up to the maximum torque value but is maintained below the torque limit level (Lc). This lessens damage to the machine. That is, without the torque limitation, the motor output reaches the maximum torque level (Lc) and remains at this level as shown by the thick broken line in Figure 2. With the torque limitation as described previously, collision energy applied to the collision target decreases by an amount corresponding to the hatched area in Figure 2. This lessens damage to the machine. After the start (t5) of the stopping process, the withdrawal means 14 gives a motor reversing instruction to cause the drive source 1 to stop rapidly, subsequently rotate reversely, and then stop again. This restrains the deformation of the machine caused by the collision. During this reverse rotation, the mode selecting means 15 gives a mode selecting instruction to disable the collision preparing means 18, thereby hindering the torque limiting means 12 from imposing the torque limit, while allowing the withdrawal with the maximum torque. This serves to provide a sufficient deformation preventing effect based on the withdrawal to further lessen damage to the machine.

The relationship between the setting of the abnormality determination level (Lb) and variations in the disturbance torque associated with the progress of the operation, and the like will be explained. Figure 1B shows variations in the disturbance torque as observed while the processing machine is operating. The disturbance torque (b) exhibits a trapezoidal change curve such as that shown in Figure 3 when the movable member 2 performs a single moving operation, a portion (upper bottom of the trapezoid) of this trapezoidal change curve in which the processing machine operates at a constant speed has a value varying as shown Figure 1B as the time passes after the start of the operation. That is, at the start of the operation, lubricating oil is still cool and may not have spread throughout the machine, so that the disturbance torque (b) has a large value. As the operation continues, the lubricating oil becomes warm and the disturbance torque (b) decreases gradually. Once the temperature of the machine substantially reaches a normal operation temperature value, if the machine continues operating for one to two hours, for example, then the disturbance torque (b) has a constant value. Further, the disturbance torque (b) also varies with the atmospheric temperature. That is, with respect to each operation, during the first operation of the movable member 2, the disturbance torque (b) exhibits a curve like a high trapezoid, but during the n-th (n is an arbitrary natural number) operation, the disturbance torque (b) exhibits a curve like a low trapezoid.

The determination level changing means 24 sets the abnormality determination level (Lb) for the disturbance torque (b) varying as described above, by averaging the values of the torque as obtained during several past driving operations that are temporally close to the current one. In the example in Figure 1B, the loads (disturbance torques (b)) as measured during four past driving operations including the preceding one are averaged to set the abnormality determination level (Lb). That is, for the n-th driving operation, the abnormality determination level (Lb) is obtained by averaging the n-1-th, n-2-th, n-3-th and n-4-th disturbance torques (b) and adding a predetermined value to this average. A curve (bn) shows an example of variations in the disturbance torque as observed if abnormality occurs in the machine during the n-th driving operation.

As described above, the abnormality determination level (Lb) is not a fixed value but a relative value determined from the loads as measured during moving operations that are temporally close to the current one, thus eliminating the need to set a level with a high safety factor. Whether or not the load is abnormal can be determined by setting a relative value for the preceding load or the like, that is, the difference therefrom, above which the current load is determined to be abnormal. Thus, a processing machine having a high and appropriate abnormal-load detection sensitivity can be configured.

During initial cycles of the processing machine, the abnormality determining means 23 compares the detected load with a fixed abnormality determination level (Lbo) to determine whether or not the load is abnormal. This also enables the abnormality of the load to be appropriately determined during the initial cycles. A curve (bn) shows an example of variations in the disturbance torque as observed if abnormality occurs in the machine during the first driving operation.

Figure 5 shows another embodiment of the present invention. According to this embodiment, in the embodiment in Figure 1, the abnormality determining means 23 is configured as follows. That is, the abnormality determining means 23 according to this embodiment has a level determining section 25 and an increase rate determining section 26. The level determining section 25 determines that the load is abnormal if the predetermined abnormality determination level (Lb) set on the basis of the load as measured during the preceding driving operation of the movable member 2 or the average of loads as measured during several past driving operations is exceeded. The increase rate determining section 26 always monitors the load detected by the load detecting means 22, and determines that the load is abnormal if the rate of increase in the load exceeds a predetermined value. The determining section 23A determines that the load is abnormal if at least one of the level determining section 25 and the increase rate determining section 26 determines the abnormality of the load, that is, the or-condition is met.

With this configuration, the determination made by the level determining section 25 of the abnormality determining means 23A leads to a high and appropriate abnormal-load detection sensitivity, as in the above embodiment, Further, since the increase rate determining means 26 determines that the load is abnormal if the rate of an increase in the load detected by the load detecting means 22 exceeds the predetermined value, the presence of unexpected abnormalities can be determined. Since the determining means 23A determines that the load is abnormal if at least one of the level determining section 25 and the increase rate determining section 26 determines the abnormality of the load, an abnormal magnitude of the load or an abnormal rate of an increase in the load can be detected, thereby enabling more appropriate abnormality detection.

In the embodiment shown in Figures 1 and 5, the torque limit determining means 19 of the collision preparing means 18 may limit the torque when the rate of increase in the load reaches a predetermined value instead of determining whether or not the load is abnormal on the basis of the preparation level (La) as described above.

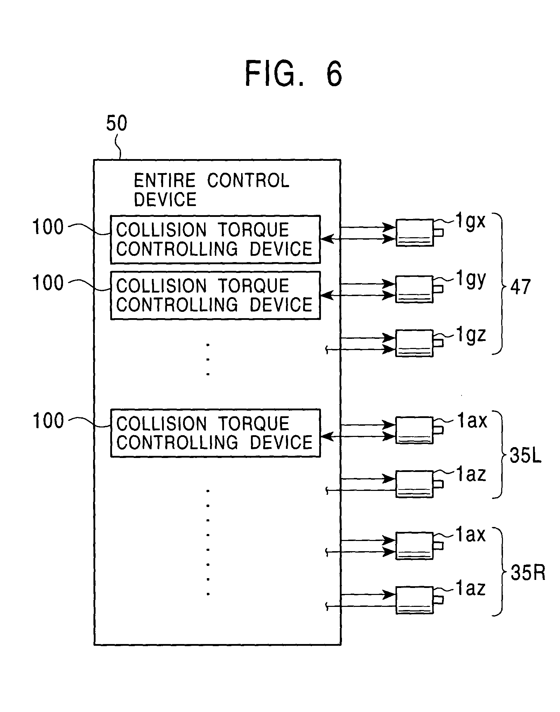

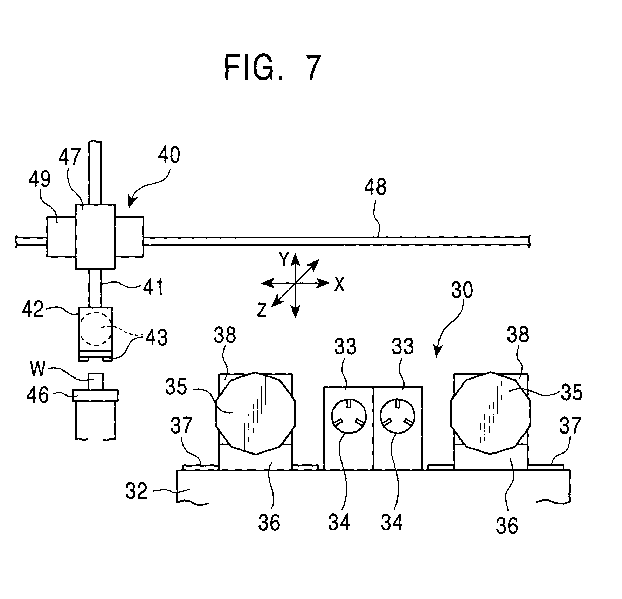

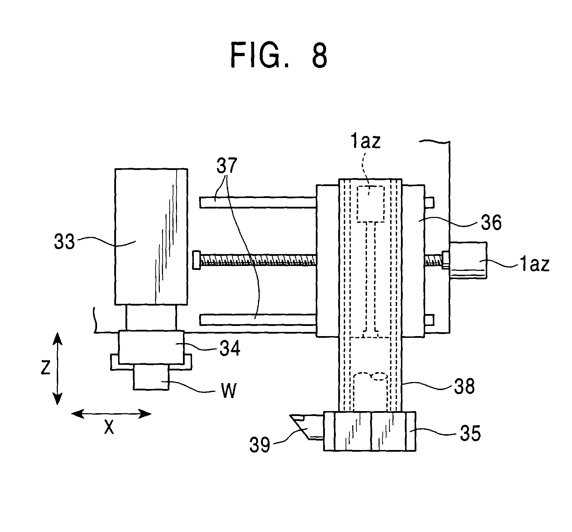

Figures 6 to 8 show a machine tool with a loader which is a processing machine with this abnormal-load detecting function as well as a control device therefor. As shown in Figure 7, a machine tool 30 is composed of a two-axes turret-type lathe and a loader 40 is composed of a gantry loader. The machine tool 30 comprises two spindle stocks 33, 33 arranged on a bed 32 in parallel and each having a main spindle 34, and slide bases 36, 36 each installed opposite to the corresponding spindle stock 33 via a rail 37 so as to be movable in the lateral direction (direction of the X-axis) of the machine. The each slide base 36 has a turret carriage 38 (Figure 8) mounted thereon so as to move forward and backward in the longitudinal direction (direction of the Z-axis) of the machine and having a turret 35 installed thereon so as to be rotatable for registration. The slide bases 36 and the turret carriages 38 are driven by X-axis servo motors 1ax (Figure 8) and X-axis servo motors 1az via feed screws. The turrets 35 each have various tools 39 attached on peripheral surfaces thereof.

The loader 40 delivers works W between a work table 46 and a main spindle chuck 34, and has an elevation rod 41 provided on a running table 49 via a longitudinally moving table 47, the running table 49 running on a rail 48. The elevation rod 41 has a loader head 42 at a lower end thereof, and the loader head 42 has loader chucks 43 provided on a front and a bottom surfaces thereof.

The chucks 43, 43 can be replaced with each other. The lateral (direction of the X-axis) running, longitudinal (direction of the Z-axis) movement, and lowering (direction of the Y-axis) of the loader 40 are effectuated by an X-axis serve motor 1gx (Figure 6), a Z-axis servo motor 1gz, and a Y-axis servo motor 1gy which are mounted on the loader 40.

The servo motors 1gx, 1gy and 1gz for the corresponding shafts of the loader 40 and the servo motors 1ax, 1az for a left and a right turret sections 35L, 35R of the machine tool are controlled by an entire control device 50 in Figure 6. The entire control device 50 is the NC device and the programmable controller as described in Figure 1 and has servo controllers (not shown in the drawings) for the corresponding shaft motors. The entire control device 50 has a collision torque controlling device 100 as described in the above embodiment, for each of the servo motors 1gx, 1gy, 1gz, 1ax, 1az. In this case, the slide bases 36 and turret carriages 38 of the machine tool 30, and the running table 49, longitudinally moving table 47 and elevation rod 41 of the loader 40 constitute the movable member 2 in the embodiment shown in Figure 1.

When the present invention is thus applied to the machine tool 30 composed of a two-axes lathe with a loader, the machine is prevented from being damaged on collisions to thereby achieve safe operations, in spite of its complicated configuration wherein the loader 40 and the machine tool 30 may interfere with each other at many locations.

The present invention provides a processing machine with an abnormal-load detecting function, comprising a drive source for driving a movable member constituting part of the processing machine, load detecting means for detecting a load on the drive source, and abnormality determining means for determining that the load is abnormal if the load detected by the load detecting means exceeds a predetermined abnormality determination level set on the basis of a load as measured during a preceding driving operation of the movable member or an average of loads as measured during several past driving operations that are temporally close to the current one. Therefore, collisions or other abnormalities can be sensitively detected, thereby preventing the machine from being operated under abnormal conditions.

If the abnormality determining means compares, during initial cycles of the processing machine, a detected load with a fixed abnormality determination level to determine whether or not the load is abnormal, the abnormalities during the initial cycles can be properly dealt with.

The present invention also provides a processing machine with an abnormal-load detecting function, comprising a drive source for driving a movable member constituting part of the processing machine, load detecting means for detecting a load on the drive source, and abnormality determining means having a level determining section and an increase rate determining means. The level determining section determines that the load is abnormal if the load detected by the load detecting means exceeds a predetermined abnormality determination level set on the basis of a load as measured during a preceding driving operation of the movable member or an average of loads as measured during several past driving operations. The increase rate determining means determines that the load is abnormal if the rate of an increase in the load detected by the load detecting means exceeds a predetermined value. The determining means determines that the load is abnormal if at least one of the level determining section and the increase rate determining section determines the abnormality of the load. Therefore, collisions or other abnormalities can be sensitively detected, thereby preventing the machine from being operated under abnormal conditions. In addition, the presence of unexpected abnormalities can be determined.

## Claims

1. A processing machine with an abnormal-load detecting function, **characterized by** comprising a drive source for driving a movable member constituting part of the processing machine, load detecting means for detecting a load on the drive source, and abnormality determining means for determining that the presence of such abnormality that the movable member collides against an obstacle if the load detected by the load detecting means exceeds an abnormality determination level set on the basis of a load as measured during a preceding driving operation of the movable member or an average of loads as measured during several past driving operations that are temporally close to the current one.

2. A processing machine with an abnormal-load detecting function, **characterized by** comprising a drive source for driving a movable member constituting part of the processing machine, load detecting means for detecting a load on the drive source, and abnormality determining means for determining the presence of such abnormality that the movable member collides against an obstacle if the load detected by the load detecting means exceeds an abnormality determination level set on the basis of a load as measured during a preceding driving operation of the movable member or an average of loads as measured during several past driving operations that are temporally close to the current one, said abnormality determining means comparing, during initial cycles of the processing machine, the detected load with a fixed abnormality determination level.

3. A processing machine with an abnormal-load detecting function comprising a drive source for driving a movable member constituting part of the processing machine, load detecting means for detecting a load on the drive source, and an abnormality determining means, the processing machine being **characterized in that** the determining means has a level determining means and an increase rate determining means, said level determining means determines that the load is abnormal if the load detected by the load detecting means exceeds an abnormality determination level set on the basis of a load as measured during a preceding driving operation of the movable member or an average of loads as measured during several past driving operations, said increase rate determining means determines that the load is abnormal if a rate of an increase in the load detected by said load detecting means exceeds a predetermined value, and said determining means determines that the load is abnormal if at least one of said level determining means and said increase rate determining section determines the abnormality of the load.
